# EUROPEAN PATENT APPLICATION

(11) **EP 4 651 446 A1**
(43) Date of publication of application: **19.11.2025**
(21) Application number: 23922791.1
(22) Date of filing: 17.02.2023
(51) Int. Cl.: H04L 12/22

(54) **INFORMATION PROCESSING DEVICE, INFORMATION PROCESSING METHOD, AND INFORMATION PROCESSING PROGRAM**

(71) Applicant: NTT, Inc., Tokyo 100-8116 (JP)
(72) Inventor: CHIBA, Nobuhiro, Musashino-shi, Tokyo 180-8585 (JP); KOYAMA, Takaaki, Musashino-shi, Tokyo 180-8585 (JP); FUJIKI, Naoto, Musashino-shi, Tokyo 180-8585 (JP); NAGAFUCHI, Yukio, Musashino-shi, Tokyo 180-8585 (JP); NAKAJIMA, Yoshiaki, Musashino-shi, Tokyo 180-8585 (JP)
(74) Representative: Hoffmann Eitle
(86) International application number: PCT/JP2023/005813
(87) International publication number: WO 2024/171457

(57) **Abstract**

An information processing device (100) includes an acquisition unit (121) configured to acquire information related to abnormal communication from an external device, a judgement unit (122) configured to judge whether the information related to the abnormal communication acquired by the acquisition unit (121) corresponds to information related to normal communication stored in a storage unit (130), and a notification unit (124) configured to output and notify the information related to the abnormal communication acquired by the acquisition unit (121) and the information related to the normal communication stored in the storage unit (130) when the judgement unit (122) judges to correspond.

## Description

### [Technical Field]

The present invention relates to an information processing device, an information processing method, and an information processing program.

### [Background Art]

Conventionally, in network state analysis technique, usual communication is learned for a certain period of time, and when communication is performed at a destination IP address different from that at the time of learning, it is distinguished to be abnormal communication.

### [Citation List]

### [Non Patent Literature]

[NPL 1] "An Experimental Study on Name Resolution History Basis Abnormal Detection and Blocking Using SDN and DNS RPZ", (Institute of Electronics, Information and Communication Engineers)

### [Summary of Invention]

### [Technical Problem]

In the conventional technique, abnormal communication cannot be distinguished with high accuracy. For example, in spite of normal communication, there is a case in which an excessive detection occurs, in which an abnormal detection is performed due to a difference from usual communication. For example, even in the case of communication addressed to the same FQDN (Fully Qualified Domain Name), there is a case in which a different IP address is obtained by name resolution of a DNS (Domain Name System). In particular, when a CDN (Content Delivery Network) is used, there is a case in which the IP address corresponding to the FQDN is frequently changed.

In this way, since the abnormal communication cannot be distinguished with high accuracy, excessive resources are required to distinguish truly abnormal communication among abnormal communications, and it is inefficient. Further, when truly abnormal communication occurs, a risk of occurrence of omission or delay of distinction increases.

The present invention has been made in view of the above description, and it is an object to provide an information processing device, an information processing method, and an information processing program which distinguishes abnormal communication with high accuracy.

### [Solution to Problem]

In order to solve the above-mentioned problem and to achieve the object, an information processing device of the present invention includes an acquisition unit configured to acquire information related to abnormal communication from an external device, a judgement unit configured to judge whether the information related to the abnormal communication acquired by the acquisition unit corresponds to information related to normal communication stored in a storage unit, and a notification unit configured to output and notify the information related to the abnormal communication acquired by the acquisition unit and the information related to the normal communication stored in the storage unit when the judgement unit judges to correspond.

### [Advantageous Effects of Invention]

According to the present invention, it is possible to distinguish the abnormal communication with high accuracy.

### [Brief Description of Drawings]

[Fig. 1] Fig. 1 is a table for explaining a problem of the conventional technique.
[Fig. 2] Fig. 2 is a block diagram showing one example of a configuration of an information processing device according to an embodiment.
[Fig. 3] Fig. 3 is a diagram for explaining an outline of processing performed by the information processing device according to the embodiment.
[Fig. 4] Fig. 4 is a diagram for explaining an outline of processing performed by the information processing device according to the embodiment.
[Fig. 5] Fig. 5 is a diagram for explaining notification processing performed by the information processing device according to the embodiment.
[Fig. 6] Fig. 6 is a flowchart showing one example of a flow of processing performed by the information processing device according to the embodiment.
[Fig. 7] Fig. 7 is a diagram showing an example of a computer that performs an information processing program.

### [Description of Embodiments]

Hereinafter, embodiments of an information processing device, an information processing method, and an information processing program according to a present application will be described in detail with reference to the drawings. Note that the present invention is not limited by the present embodiments. In addition, in description of the drawings, the same portions are denoted by the same reference numerals and repeated description will be omitted.

[Entire Outline] First, an entire outline will be described.

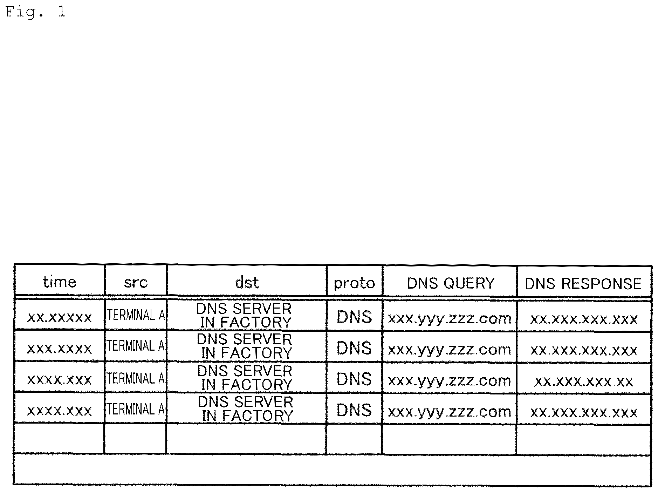

Fig. 1 is a table for explaining a problem of the conventional technique.

Conventionally, there is an abnormal communication detection system for identifying communication different from usual as abnormal communication. In such an abnormal communication detection system, unknown abnormal communication different from usual can be correctly identified to be abnormal, and on the other hand, there is a case in which excessive detection occurs, in which normal communication different from usual is erroneously identified as abnormal communication.

For example, as shown in Fig. 1, even in communication addressed to the same FQDN, there is a case in which a different IP address is obtained by name resolution of a DNS. In particular, when a CDN is used, there is a case in which the IP address corresponding to the FQDN is frequently changed.

In the example shown in Fig. 1, when learning of a terminal A and the IP address corresponding to the DNS response is not performed, the excessive detection occurs every time the terminal A communicates with each IP, although the communication is performed with the same FQDN. In addition, Fig. 1 shows the example of only the terminal A, but when the number of terminals increases, occurrence of excessive detection increases exponentially.

When the excessive detection occurs in a large amount, it takes much time to confirm whether it is really abnormal communication, and it is inefficient, and when truly abnormal communication occurs, a risk of occurrence of a response delay and a response omission is increased.

Then, the information processing device 100 displays information (FQDN) on a communication destination together with the communication identified to be abnormal, so that it gives a clue for estimating a cause of occurrence of the communication identified to be abnormal to a user.

By doing this, the user can identify communication which does not require countermeasures and communication which requires countermeasures in an early stage among a large number of communications which are identified to be abnormal, and can quickly cope with truly dangerous abnormal communication and efficiently maintain a secure NW.

For example, when the communication destination of the communication identified to be abnormal can be determined from the FQDN that there is no problem as the communication destination (OS provider, virus countermeasure software vendor, reliable communication destination, or the like), it is possible to determine that the possibility of abnormal communication is low. On the contrary, when the FQDN of the communication destination is unknown although the communication destination identified to be abnormal is access to the Internet (when direct access is performed from the IP address), it is possible to determine that the possibility of abnormal communication is high.

In addition, the FQDN and the IP address corresponding to it determined by the user that the possibility of abnormal communication is low are set so as not to be identified as the abnormal communication from the next time, so that more efficient correspondence can be attained.

In addition, when the access destination FQDN or the IP address determined that the possibility of abnormal communication is low is known, the FQDN or the IP address is registered as a normal communication destination list in advance, so that the information processing device 100 can suppress the occurrence of a notification matching to this.

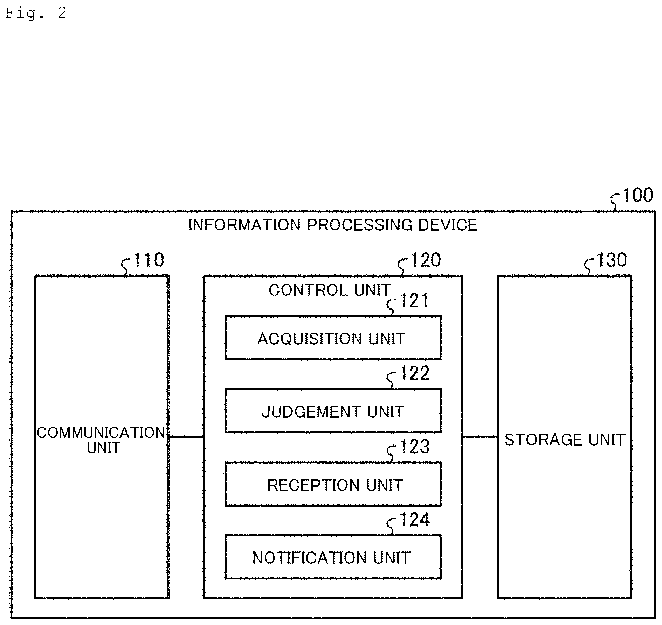

[Configuration of Information Processing Device] Next, referring to Fig. 2, a configuration of the information processing device 100 will be described. As shown in Fig. 2, the information processing device 100 includes a communication unit 110, a control unit 120, and a storage unit 130. Note that each unit of these may be distributed and held in a plurality of devices. Processing of each unit of these will be described below.

The communication unit 110 is realized by a NIC (Network Interface Card) or the like, and enables communication between an external device and the control unit 120 via an electric communication line such as a LAN (Local Area Network) or the Internet. For example, the communication unit 110 enables the communication between the external device and the control unit 120.

The storage unit 130 is realized by a semiconductor memory element such as a RAM (Random Access Memory) or a flash memory, or a storage device such as a hard disk or an optical disc. Information stored in the storage unit 130 includes information related to the abnormal communication, information related to the normal communication, information related to a notification target, and other information necessary for notification of abnormal communication, for example.

Here, the information related to the abnormal communication is detailed information on communication identified to be abnormal by the external device such as an abnormal communication detection system, and includes a transmission destination IP address, a transmission destination port number, a transmission source IP address, a transmission source port number, and a transmission source MAC address. In addition, the information related to the normal communication is information indicating the normal communication, and includes information on a FQDN and an IP address corresponding to the FQDN.

Here, the information on the FQDN and the IP address corresponding to the FQDN stored in the storage unit 130 may be the FQDN and the IP address extracted by analyzing a DNS response packet acquired by mirroring.

In addition, the information related to the notification target is information indicating the notification target, and includes information on a selection from the user and a normal communication destination list. Note that, the information stored in the storage unit 130 is not limited to the above-described examples.

The control unit 120 is realized by using a CPU (Central Processing Unit), a NP (Network Processor), an FPGA (Field Programmable Gate Array), or the like and executes a processing program stored in a memory. As shown in Fig. 2, the control unit 120 includes an acquisition unit 121, a judgement unit 122, a reception unit 123, and a notification unit 124. Hereinafter, each unit included in the control unit 120 will be described.

The acquisition unit 121 acquires information related to the abnormal communication from the external device. For example, the acquisition unit 121 acquires information on the transmission destination IP address, the transmission destination port number, the transmission source IP address, the transmission source port number, and the transmission source MAC address from the abnormal communication detection system as the information related to the abnormal communication.

The judgement unit 122 judges whether the information related to the abnormal communication acquired by the acquisition unit 121 corresponds to the information related to the normal communication stored in the storage unit 130. For example, the judgement unit 122 judges whether the transmission destination IP address included in the information related to the abnormal communication acquired by the acquisition unit 121 matches the IP address corresponding to the FQDN included in the information related to the normal communication stored in the storage unit 130.

The reception unit 123 receives information related to the notification target indicating whether the information related to the abnormal communication judged to correspond by the judgement unit 122 is the notification target. For example, the reception unit 123 receives a selection from the user as the information related to the notification target indicating whether the information related to the abnormal communication judged to correspond by the judgement unit 122 is the notification target. Note that the selection from the user includes the selection of "notification target", "not notification target", or the like from the user.

For example, the reception unit 123 receives the selection of "not notification target" from the user as the information related to the notification target indicating whether the information related to the abnormal communication judged to correspond by the judgement unit 122 is the notification target.

In addition, for example, the reception unit 123 receives information on the communication destination as the information related to the notification target indicating whether the information related to the abnormal communication judged to correspond by the judgement unit 122 is the notification target. Here, as the information on the communication destination, the normal communication destination list indicating a list of normal communication destinations is cited as one example. For example, the reception unit 123 receives the normal communication destination list as the information related to the notification target indicating whether the information related to the abnormal communication judged to correspond by the judgement unit 122 is the notification target.

When the judgement unit 122 judges to correspond, the notification unit 124 outputs and notifies the information related to the abnormal communication acquired by the acquisition unit 121 and the information related to the normal communication stored by the storage unit 130. Note that the output of the notification unit 124 includes transmission, display, and the like of target information. For example, when the judgement unit 122 judges to correspond, the notification unit 124 displays and notifies the information related to the abnormal communication acquired by the acquisition unit 121 and the FQDN as the information related to the normal communication stored in the storage unit 130.

In addition, for example, when the judgement unit 122 judges to correspond, the notification unit 124 displays and notifies the information on the transmission destination IP address, the transmission destination port number, the transmission source IP address, the transmission source port number, and the transmission source MAC address as the information related to the abnormal communication acquired by the acquisition unit 121 and the FQDN together as the information related to the normal communication stored in the storage unit 130.

In addition, the notification unit 124 outputs and notifies the information related to the abnormal communication acquired by the acquisition unit 121 and the information related to the normal communication stored in the storage unit 130 in response to the information related to the notification target received by the reception unit 123. For example, the notification unit 124 outputs and notifies the information related to the abnormal communication acquired by the acquisition unit 121 and the information related to the normal communication stored in the storage unit 130 in response to the selection from the user received by the reception unit 123.

For example, the notification unit 124 receives the selection of "notification target" from the user received by the reception unit 123, and displays and notifies the information related to the abnormal communication acquired by the acquisition unit 121 and the information related to the normal communication stored in the storage unit 130.

In addition, for example, the notification unit 124 outputs and notifies the information related to the abnormal communication acquired by the acquisition unit 121 and the information related to the normal communication stored in the storage unit 130 in response to the information on the communication destination received by the reception unit 123. For example, when the reception unit 123 receives the information on the confirmed communication destination and the information related to the abnormal communication acquired by the acquisition unit 121 is not included in the normal communication destination list received by the reception unit 123, the notification unit 124 displays and outputs the information related to the abnormal communication acquired by the acquisition unit 121 and the information related to the normal communication stored in the storage unit 130.

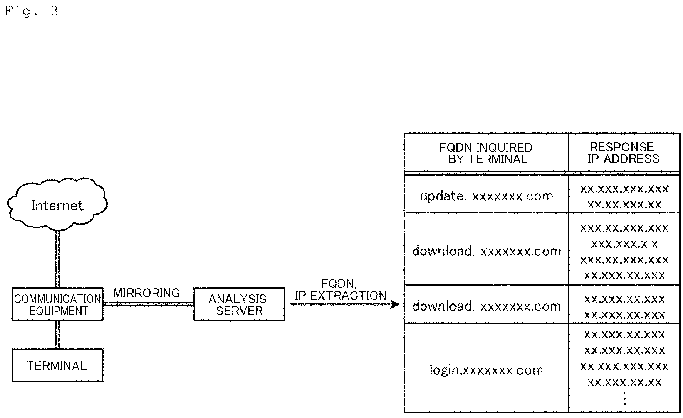

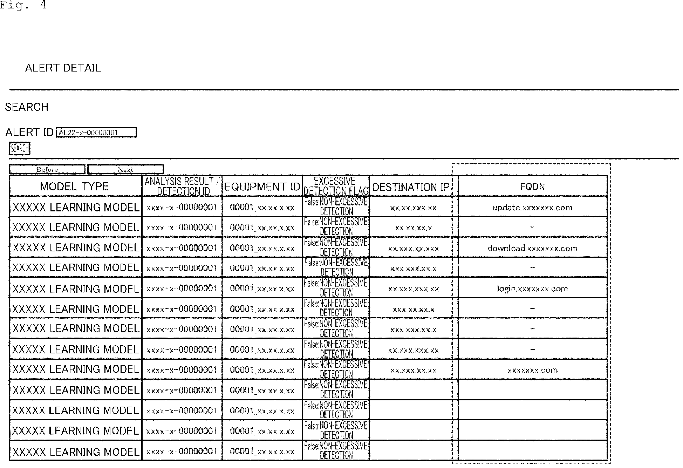

[Notification Processing] Next, referring to Fig. 3 and Fig. 4, notification processing performed by the information processing device 100 will be described. Fig. 3 and Fig. 4 are diagrams for explaining the outline of processing performed by the information processing device 100 according to the embodiment.

First, the storage unit 130 stores information on a combination of the FQDN and the IP address corresponding to the FQDN in advance. For example, as shown in Fig. 3, the storage unit 130 analyzes contents of a DNS inquiry and a response packet of each terminal by packet capture, and stores the information on the combination of the FQDN inquired and the received IP address by each terminal.

Next, the acquisition unit 121 receives the information on the transmission destination IP address, the transmission destination port number, the transmission source IP address, the transmission source port number, and the transmission source MAC address from the abnormal communication detection system.

Subsequently, the judgement unit 122 judges whether the transmission destination IP address included in the information related to the abnormal communication acquired by the acquisition unit 121 matches the IP address corresponding to the FQDN included in the information related to the normal communication stored in the storage unit 130.

At this time, when the information on the transmission destination IP address acquired by the acquisition unit 121 matches the IP address corresponding to the FQDN analyzed in advance and stored in the storage unit 130 by the judgement unit 122, the notification unit 124 adds the information on the FQDN corresponding to the transmission destination IP address stored in the storage unit 130 to the information on the transmission destination IP address received from the abnormal communication detection system or the like, and notifies the user of them together.

By doing this, as shown in Fig. 4, even when a large number of alerts are generated, it becomes easy to determine the possibility of the abnormal communication from the FQDN. For example, if the host name or domain name is known, it is determined that it is not the abnormal communication. In addition, for example, it is determined that there is a high possibility of abnormal communication in communication to the outside by direct input of the transmission destination IP address.

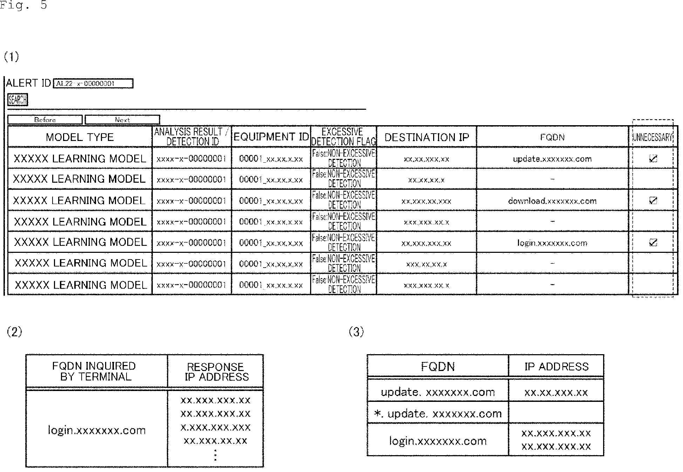

[Notification Processing] Next, referring to Fig. 5, notification processing performed by the information processing device 100 will be described. Fig. 5 is a diagram for explaining the notification processing performed by the information processing device 100. Among these, Fig. 5(1) is a detailed screen of the generated alert. Fig. 5(2) is a list of the FQDN and the IP address obtained from the DNS packet. Fig. 5(3) is the normal communication destination list.

First, the reception unit 123 receives the information related to the notification target. For example, as shown in Fig. 5(1), the reception unit 123 receives a check mark in a column indicating to be unnecessary, so that it receives a selection of "notification is unnecessary" from the user.

By doing this, as shown in Fig. 5(2), the notification unit 124 does not perform the notification thereafter for the communication with each IP address associated with the FQDN that has received the selection of "notification is unnecessary" from the user as the transmission destination.

In addition, for example, as shown in Fig. 5(3), the reception unit 123 may receive the FQDN which has been found to be the normal communication destination in advance and a list (normal communication destination list) of IP address corresponding to the FQDN as the information on the communication destination.

By doing this, the notification unit 124 prevents the occurrence of unnecessary notification by using the information on the normal communication destination list received in advance.

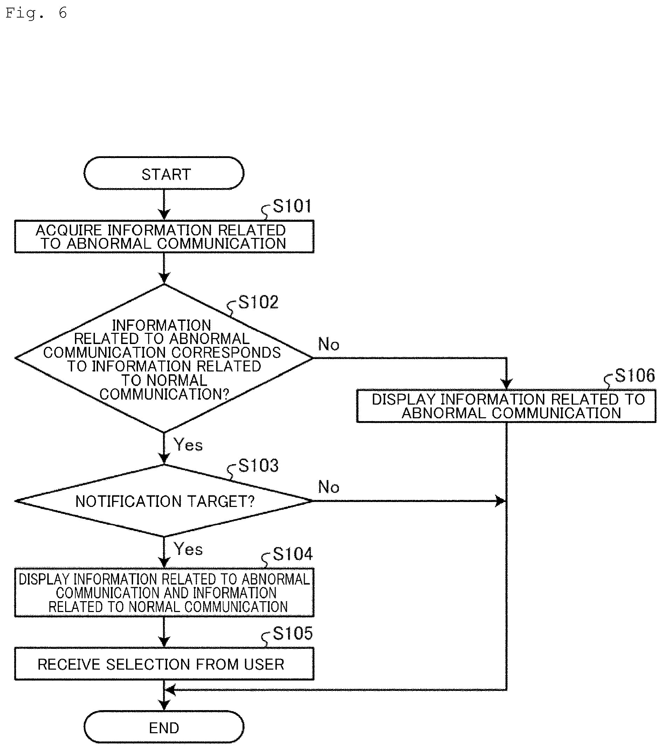

[Flowchart] Next, referring to Fig. 6, a flow of processing performed by the information processing device 100 will be described. Note that the following steps S101 to S106 may be executed in a different order. In addition, among the following steps S101 to S106, some pieces of processing may be omitted.

First, the acquisition unit 121 acquires the information related to the abnormal communication (step S101). For example, the acquisition unit 121 acquires the information on the transmission destination IP address, the transmission destination port number, the transmission source IP address, the transmission source port number, and the transmission source MAC address from the abnormal communication detection system as the information related to the abnormal communication.

Next, the judgement unit 122 judges whether the information related to the abnormal communication acquired by the acquisition unit 121 corresponds to the information related to the normal communication stored in the storage unit 130 (step S102). For example, the judgement unit 122 judges whether the transmission destination IP address included in the information related to the abnormal communication acquired by the acquisition unit 121 matches the IP address corresponding to the FQDN included in the information related to the normal communication stored in the storage unit 130.

Here, when the judgement unit 122 judges that the information related to the abnormal communication corresponds to the information related to the normal communication (step S102 "YES"), the notification unit 124 judges whether the information related to the abnormal communication judged to correspond by the judgement unit 122 is the notification target (step S103).

Here, when the notification unit 124 judges that the information related to the abnormal communication judged to correspond by the judgement unit 122 is the notification target (step S103 "YES"), the notification unit 124 outputs and notifies the information related to the abnormal communication acquired by the acquisition unit 121 and the information related to the normal communication stored in the storage unit 130 in response to the information related to the notification target received by the reception unit 123 (step S104).

For example, the notification unit 124 displays and notifies the information related to the abnormal communication acquired by the acquisition unit 121 and the FQDN as the information related to the normal communication stored in the storage unit 130 in response to the selection from the user received by the reception unit 123.

Thereafter, the reception unit 123 receives the information related to the notification target indicating whether the information related to the abnormal communication judged to correspond by the judgement unit 122 is the notification target (step S105). For example, the reception unit 123 receives the selection from the user as the information related to the notification target indicating whether the information related to the abnormal communication judged to correspond by the judgement unit 122 is the notification target.

On the other hand, in the step S103, when the notification unit 124 judges that the information related to the abnormal communication judged to correspond by the judgement unit 122 is not the notification target (step S103 "NO"), the notification unit 124 does not perform the notification.

On the other hand, in the step S102, when the judgement unit 122 judges that the information related to the abnormal communication does not correspond to the information related to the normal communication (step S102 "NO"), the notification unit 124 outputs and notifies the information related to the abnormal communication (step S106). For example, the notification unit 124 outputs and notifies the information on the transmission destination IP address, the transmission destination port number, the transmission source IP address, the transmission source port number, and the transmission source MAC address as the information related to the abnormal communication.

[Effects] The information processing device 100 according to the embodiment includes the acquisition unit 121 that acquires the information related to the abnormal communication from the external device, the judgement unit 122 that judges whether the information related to the abnormal communication acquired by the acquisition unit 121 corresponds to the information related to the normal communication stored in the storage unit 130, and the notification unit 124 that outputs and notifies the information related to the abnormal communication acquired by the acquisition unit 121 and the information related to the normal communication stored in the storage unit 130 when the judgement unit 122 judges to correspond.

Thus, the information processing device 100 judges whether or not the information related to the abnormal communication corresponds to the information related to the normal communication stored in advance, and outputs and notifies the information related to the normal communication together when judging to correspond, so that it can distinguish the abnormal communication with high accuracy.

In addition, the notification unit 124 of the information processing device 100 according to the embodiment displays and notifies the FQDN as the information related to the normal communication stored in the storage unit 130.

Thus, the information processing device 100 judges whether or not the information related to the abnormal communication corresponds to the information related to the normal communication stored in advance, and displays and notifies the FQDN together when judging to correspond, so that it can distinguish the abnormal communication with high accuracy.

In addition, the information processing device 100 according to the embodiment further includes the reception unit 123 that receives the information related to the notification target indicating whether the information related to the abnormal communication judged to correspond by the judgement unit 122 is the notification target, and the notification unit 124 outputs and notifies the information related to the abnormal communication acquired by the acquisition unit 121 and the information related to the normal communication stored in the storage unit 130 in response to the information related to the notification target received by the reception unit 123.

Thus, the information processing device 100 judges whether or not the information related to the abnormal communication corresponds to the information related to the normal communication stored in advance, and outputs and notifies the information related to the normal communication together in response to the information related to the notification target when judging to correspond, so that it can distinguish the abnormal communication with high accuracy and prevent the unnecessary notification.

In addition, the reception unit 123 of the information processing device 100 according to the embodiment receives the selection from the user as the information related to the notification target, and the notification unit 124 outputs and notifies the information related to the abnormal communication acquired by the acquisition unit 121 and the information related to the normal communication stored in the storage unit 130 in response to the selection from the user received by the reception unit 123.

Thus, the information processing device 100 judges whether or not the information related to the abnormal communication corresponds to the information related to the normal communication stored in advance, and outputs and notifies the information related to the normal communication together in response to the information related to the notification target received from the user when judging to correspond, so that it can distinguish the abnormal communication with high accuracy and prevent the unnecessary notification.

In addition, the reception unit 123 of the information processing device 100 according to the embodiment receives the information on the communication destination as the information related to the notification target, and the notification unit 124 outputs and notifies the information related to the abnormal communication acquired by the acquisition unit 121 and the information related to the normal communication stored in the storage unit 130 in response to the information on the communication destination received by the reception unit 123.

Thus, the information processing device 100 judges whether or not the information related to the abnormal communication corresponds to the information related to the normal communication stored in advance, and outputs and notifies the information related to the normal communication together in response to the information on the normal communication destination list when judging to correspond, so that it can distinguish the abnormal communication with high accuracy and prevent the unnecessary notification.

[Program] It is also possible to create a program that describes processing to be executed by the information processing device 100 described in the above-described embodiment and is written in a computer-executable language. In this case, when the computer executes the program, the same effects as that in the above-described embodiment can be obtained. Further, the same processing as that in the above-described embodiments may be realized by recording such a program on a computer-readable recording medium and causing the computer to read and execute the program recorded on this recording medium.

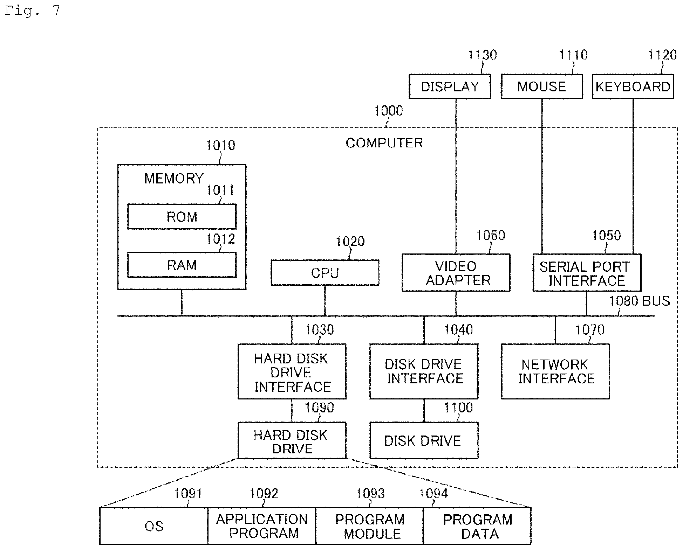

Fig. 7 is a diagram showing one example of the computer that executes an information processing program. As shown in Fig. 7, for example, the computer 1000 includes a memory 1010, a CPU 1020, a hard disk drive interface 1030, a disk drive interface 1040, a serial port interface 1050, a video adapter 1060, and a network interface 1070. Each unit of these is connected by a bus 1080.

The memory 1010 includes a ROM (Read Only Memory) 1011 and a RAM 1012. The ROM 1011 stores a boot program such as a BIOS (Basic Input Output System), for example. The hard disk drive interface 1030 is connected to a hard disk drive 1090. The disk drive interface 1040 is connected to a disk drive 1100. A removable storage medium such as a magnetic disc or an optical disc is inserted into the disk drive 1100, for example. A mouse 1110 and a keyboard 1120 are connected to the serial port interface 1050, for example. For example, a display 1130 is connected to the video adapter 1060.

Here, as shown in Fig. 7, the hard disk drive 1090 stores an OS 1091, an application program 1092, a program module 1093, and program data 1094, for example. Each table described in the above-described embodiment is stored in the hard disk drive 1090 or the memory 1010, for example.

In addition, the information processing program is stored in the hard disk drive 1090 as the program module in which commands to be executed by the computer 1000 are described, for example. Specifically, the program module 1093 in which each type of processing to be executed by the computer 1000 described in the above-described embodiment is described is stored in the hard disk drive 1090.

In addition, data used for the information processing by the information processing program is stored in the hard disk drive 1090 as the program data, for example. Then, the CPU 1020 reads the program module 1093 and the program data 1094 stored in the hard disk drive 1090 to the RAM 1012 as necessary, and performs each of the above-mentioned procedures.

Note that the program module 1093 and the program data 1094 according to the information processing program are not limited to being stored in the hard disk drive 1090, and may be stored in a detachable storage medium and read by the CPU 1020 via the disk drive 1100 or the like, for example. Alternatively, the program module 1093 and the program data 1094 according to the control program may be stored in another computer connected via a network such as a LAN (Local Area Network) or a WAN (Wide Area Network) and may be read by the CPU 1020 via the network interface 1070.

[Others] While various embodiments have been described in detail in the present specification with reference to the drawings, a plurality of these embodiments are examples and the present invention is not intended to limit to the plurality of these embodiments. The features described in the present specification can be realized by various methods including various modifications and improvements based on the knowledge of those skilled in the art.

In addition, the above-mentioned "unit (module, -er suffix, - or suffix)" can be reread as a unit, means, circuit, or the like. For example, the communication module, the control module, and the storage module can be reread as a communication unit, a control unit, and a storage unit, respectively.

### [Reference Signs List]

- 100: Information processing device
- 110: Communication unit
- 120: Control unit
- 121: Acquisition unit
- 122: Judgement unit
- 123: Reception unit
- 124: Notification unit
- 130: Storage unit

## Claims

1. An information processing device comprising:
an acquisition unit configured to acquire information related to abnormal communication from an external device;
a judgement unit configured to judge whether the information related to the abnormal communication acquired by the acquisition unit corresponds to information related to normal communication stored in a storage unit; and
a notification unit configured to output and notify the information related to the abnormal communication acquired by the acquisition unit and the information related to the normal communication stored in the storage unit when the judgement unit judges to correspond.

2. The information processing device according to claim 1, wherein the notification unit displays and notifies FQDN as the information related to the normal communication stored in the storage unit.

3. The information processing device according to claim 1, further including:
a reception unit configured to receive information related to a notification target indicating whether the information related to the abnormal communication judged to correspond by the judgement unit is the notification target, wherein
the notification unit outputs and notifies the information related to the abnormal communication acquired by the acquisition unit and the information related to the normal communication stored in the storage unit in response to the information related to the notification target received by the reception unit.

4. The information processing device according to claim 3, wherein
the reception unit receives a selection from a user as the information related to the notification target, and
the notification unit outputs and notifies the information related to the abnormal communication acquired by the acquisition unit and the information related to the normal communication stored in the storage unit in response to the selection from the user received by the reception unit.

5. The information processing device according to claim 3, wherein
the reception unit receives information on a communication destination as the information related to the notification target, and
the notification unit outputs and notifies the information related to the abnormal communication acquired by the acquisition unit and the information related to the normal communication stored in the storage unit in response to the information on the communication destination received by the reception unit.

6. An information processing method executed by a computer, the information processing method comprising:
an acquisition process of acquiring information related to abnormal communication from an external device;
a judgement process of judging whether the information related to the abnormal communication acquired in the acquisition process corresponds to information related to normal communication stored in a storage unit; and
a notification process of outputting and notifying the information related to the abnormal communication acquired in the acquisition process and the information related to the normal communication stored in the storage unit when judging to correspond in the judgement process.

7. An information processing program that causes a computer to execute:
an acquisition step of acquiring information related to abnormal communication from an external device;
a judgement step of judging whether the information related to the abnormal communication acquired in the acquisition step corresponds to information related to normal communication stored in a storage unit; and
a notification step of outputting and notifying the information related to the abnormal communication acquired in the acquisition step and the information related to the normal communication stored in the storage unit when judging to correspond in the judgement step.
